# EUROPEAN PATENT APPLICATION

(11) **EP 4 052 569 A2**
(43) Date of publication of application: **07.09.2022**
(21) Application number: 22159670.3
(22) Date of filing: 02.03.2022
(51) Int. Cl.: A01K 39/01

(54) **BIRD FEEDER AND SEED GUARD**

(30) Priority: 03.03.2021 US 202163156202 P
(71) Applicant: Brome Bird Care Inc., Knowlton, QC J0E 1V0 (CA)
(72) Inventor: COTE, Paul L., CANADA, Québec J0E 1V0 (CA)
(74) Representative: Urizar Anasagasti, Jesus Maria

(57) **Abstract**

The present disclosure provides a bird feeder having a seed container secured to a seed tray to provide access to seeds. The seed tray is in turn comprised of an undercut and a central rod having a spring mechanism. The spring mechanism allows for a shroud that is connected to the central rod, to move from a first position where access to the seeds is permitted to a second position where access to the seeds is prevented. The seed tray is also comprised of an undercut, either at a periphery of the seed tray or at individual ports of the seed tray, the undercut to prevent seeds from falling out of the seed tray when the bird feeder sways or otherwise moves. A seed guard may also be provided onto the seed tray, the seed guard having a circumferential undercut to prevent seeds from falling out of the seed tray.

## Description

### FIELD

The disclosure relates generally to the field of bird feeders, and more specifically to a seed guard for a bird feeder seed tray and a seed tray undercut used in bird feeders.

### BACKGROUND

Bird feeders have been around for quite some time for bird watchers and animal lovers. However, many problems exist with current bird feeders, including but not limited to squirrels or other smaller animals getting on the bird feeder and shaking it to attempt to loosen seeds and have them fall out of the seed tray. The bird feeders also sway in the wind, which similarly results in seeds falling out of the seed trays of those bird feeders.

As such, there is a need for a novel type of bird feeder that can overcome the problems of the prior art and reduce the number of seeds that fall out of the seed tray.

### SUMMARY

In an aspect, the present disclosures provides a bird feeder comprising: a seed container to contain seeds; a seed tray secured to the seed container and adapted to provide access to the seeds; a shroud connected the seed tray, the shroud to protect at least a portion of the seed container and seed tray; and, a cover releasably secured to at least one of the shroud and the seed container.

In another aspect, the present disclosure provides a seed guard comprising: a rim to position onto a seed tray of a bird feeder; and, at least one undercut protruding from the rim, creating a peripheral barrier to prevent seeds falling out of the seed tray.

### BRIEF DESCRIPTION OF THE DRAWINGS

The following figures serve to illustrate various embodiments of features of the disclosure. These figures are illustrative and are not intended to be limiting.
Figure 1 is a perspective view of a bird feeder, according to an embodiment of the present disclosure;
Figure 2 is a perspective view of a seed tray connected to a seed guard and seed container of the bird feeder of Figure 1, according to an embodiment of the present disclosure;
Figure 3 is a perspective view of a seed tray connected to a seed guard of the bird feeder of Figure 1, according to an embodiment of the present disclosure;
Figure 4 is a perspective cross-sectional exploded view of a seed tray connected to a seed guard of the bird feeder of Figure 1, according to an embodiment of the present disclosure;
Figure 5 is a perspective view of a seed guard of the bird feeder of Figure 1, according to an embodiment of the present disclosure;
Figure 6 is a side cross-sectional view of a seed tray connected to a seed guard of the bird feeder of Figure 1, according to an embodiment of the present disclosure;
Figure 7 is a perspective view of a two-piece seed tray for another type of bird feeder, according to another embodiment of the present disclosure;
Figure 8 is an enlarged perspective cross-sectional view of the two-piece seed tray shown in Figure 7, according to another embodiment of the present disclosure;
Figure 9 is a perspective view of a one-piece seed tray for yet another type of bird feeder, according to yet another embodiment of the present disclosure;
Figure 10 is an enlarged perspective cross-sectional view of the one-piece seed tray shown in Figure 9, according to yet another embodiment of the present disclosure; and,
Figure 11 is a perspective cross-sectional view of a seed tray, according to another embodiment of the present disclosure.

### DETAILED DESCRIPTION

The following embodiments are merely illustrative and are not intended to be limiting. It will be appreciated that various modifications and/or alterations to the embodiments described herein may be made without departing from the disclosure and any modifications and/or alterations are within the scope of the contemplated disclosure.

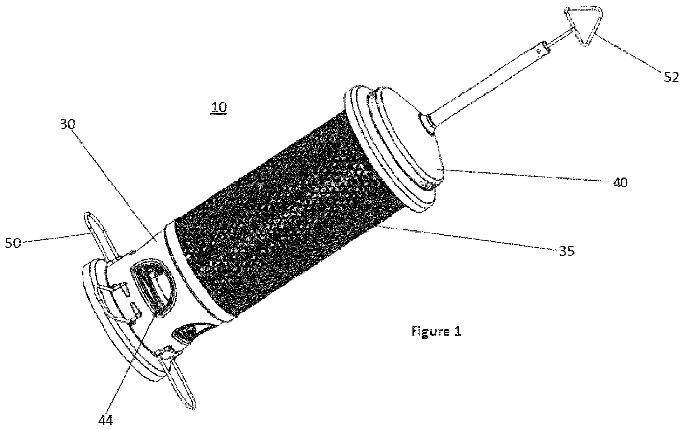

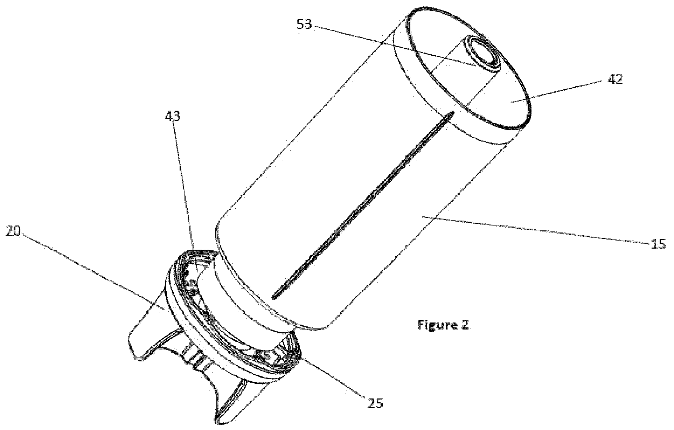

With reference to Figures 1 and 2 and according to an embodiment of the present disclosure, a bird feeder 10 is shown, preferably comprising a seed container 15 to contain seeds, a seed tray 20 adapted to provide access to the seeds, a seed guard 25, a shroud base 30, mesh 35 and a cover 40. The seed tray 20 is secured to the seed container 15 by screws fastened into both of the seed tray 20 and seed container 15; however, other types of connections are possible such as threaded engagement or other means as known in the art. The seed container 15 receives seeds deposited therein from a top portion 42 and funnels the seeds to the seed tray 20. Seeds accumulate on the seed tray 20 and birds can access the seeds thereon. The seed tray 20 can have a singular opening 43 to provide circumferential access to the seeds, or the seed tray 20 could have a plurality of seed ports (not shown) to have specific access points to the seeds. In this particular bird feeder, the seed tray 20 has a singular opening 43; however, the shroud base 30 has a plurality of ports 44 that provide specific access points to the seeds within the singular opening 43 of the seed tray 20. A seed guard 25 is shown connected to the seed tray 20. The seed guard 25 is positioned at an outer peripheral edge (not shown) of the seed tray 20. A shroud is shown comprised of a shroud base 30 and a mesh 35. The shroud base 30, the mesh 35 and the cover 40 are welded together although they can be secured to one another in accordance with other means as known in the art. A purpose of the shroud base 30 and mesh 35 is to protect at least a portion of the seed container 15 and the seed tray 20 from squirrels or other small animals. A cover 40 is also shown, the cover 40 having a hanger 52 positioned therethrough. The hanger 52 has a hook to attach to a branch or another structure to hang the bird feeder 10. The hanger 52 is connected to a central rod 53, which has a movement mechanism (not shown) positioned therein. In a preferred embodiment, the movement mechanism would be a spring mechanism. The central rod 53 forms part of the seed tray 20, which is connected to the seed guard 25, seed container 15 and hanger 52. When weight from squirrels or other larger animals is placed on the perch 50 or the shroud in general, the shroud biases the central rod 53 and actuates the spring mechanism (not shown) and the shroud moves downwardly independently of the seed tray 20, seed container 15 and seed guard 25. Therefore, the seed ports 44 of the shroud base 30 are no longer aligned with the singular opening 43 of the seed tray 20 and access to the seeds is prevented.

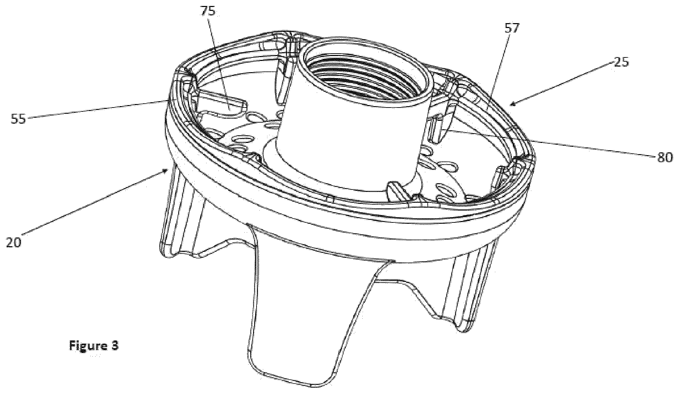

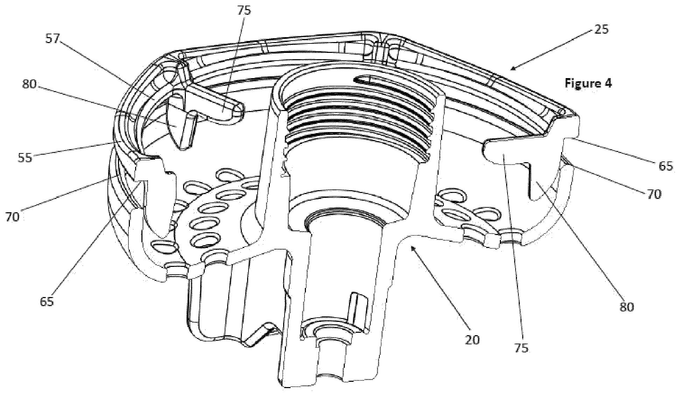

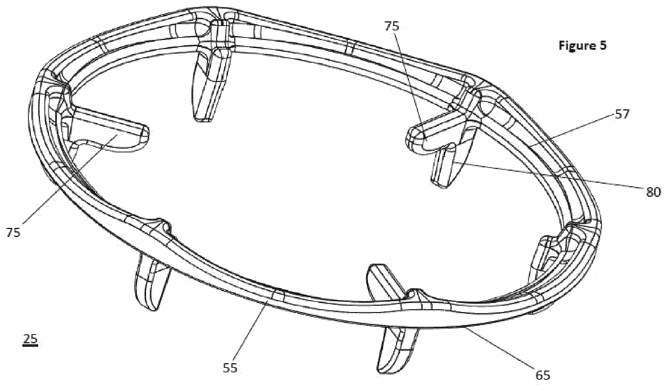

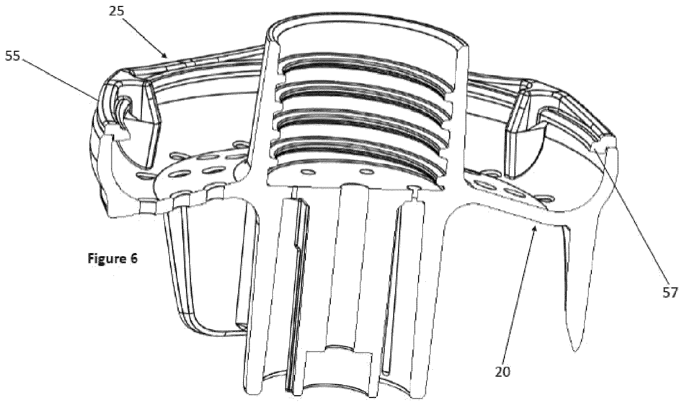

With reference to Figures 3, 4, 5 and 6 and according to an embodiment of the present disclosure, the seed guard 25 is shown in greater detail positioned on the seed tray 20. The seed guard 25 is further comprised of a rim 55, the rim 55 extending about the circumference of the seed guard 25. The rim 55 has an undercut 57, which serves to prevent seeds from falling out of the seed tray 20. Indeed, it is a problem in bird feeders that squirrels and other larger animals will attempt to shake bird feeders to get the seeds to bounce around and fall off. The seed guard 25, and more specifically the undercut 57 of rim 55, reduces the number of seeds that fall out of the seed tray 20 from the swaying and shaking of the bird feeder from squirrels. Indeed, the reduction in seeds falling out occurs as the undercut 57 of rim 55 creates a barrier above the outer peripheral edge 70 of the seed tray 20. The rim 55 is further comprised of a stepped portion 65. The stepped portion 65 rests on the outer peripheral edge 70 of the seed tray 20. The seed guard 25 is also further comprised of a plurality of projections 75, the projections 75 projecting toward the center of the seed guard 25. Extending below each of the projections 75 and the rim 55 are stabilizers 80. The projections 75 and stabilizers 80 help keep the seed guard 25 in place over the seed tray 25. As shown, the stabilizers 80 have a curved inner face to mate flushly with an interior surface of the seed tray 25.

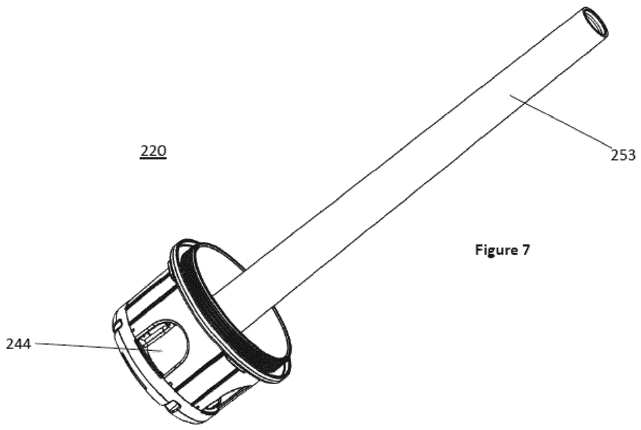

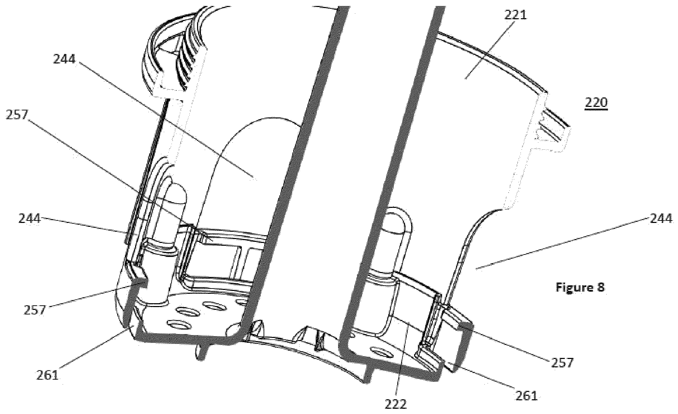

With reference to Figures 7 and 8 and according to another embodiment of the present disclosure, a two-piece seed tray 220 is shown without a seed guard. The seed tray 220 is further comprised of an upper portion 221 and a lower portion 222, the lower portion 222 secured to the upper portion 221 by screws (not shown), although a worker skilled in the art would appreciate that the upper portion 221 and lower portion 222 could be a single piece or attached together in any number of ways known in the art. The seed tray 220 is also comprised of a central rod 253, the central rod 253 containing a spring mechanism (not shown) to allow for the movement of a shroud (not shown) independent of the seed tray 220. The seed tray 220 is further comprised of seed apertures 244, also known as ports, the apertures 244 adapted to allow specific access points to seeds placed within the seed tray 220. As shown, the seed tray 220 is further comprised of an undercut 257 positioned below and extending inwardly from each of the apertures 244. The undercut 257 acts as a small lip or barrier on which seeds will abut and therefore be prevented from falling out of the apertures 244 when the seed tray 220 is shaken or swayed. Indeed, it has been shown that such an undercut 257 greatly reduces seed waste in bird feeders. Small openings 261 are also shown, positioned directly below the undercuts 257. These openings 261 are created during the manufacturing of the seed tray 220 and the undercuts 257 specifically, as a small tab is inserted therein as part of the mould. The openings 261 help provide additional ventilation to the seeds, which is desired as moist seeds can rot when they are and remain wet. The undercuts 257 extend inwardly and over the openings 261.

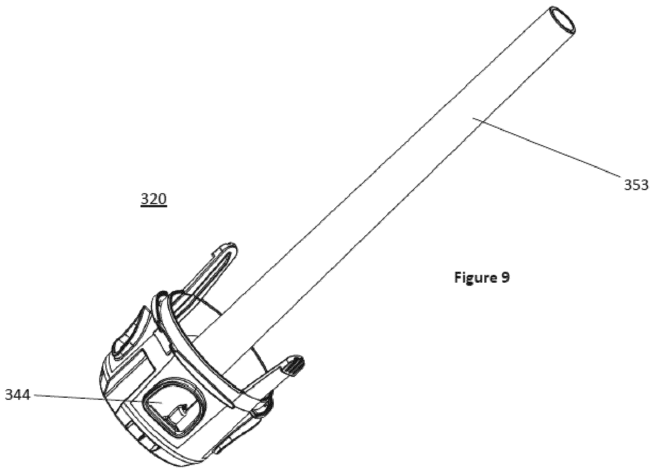

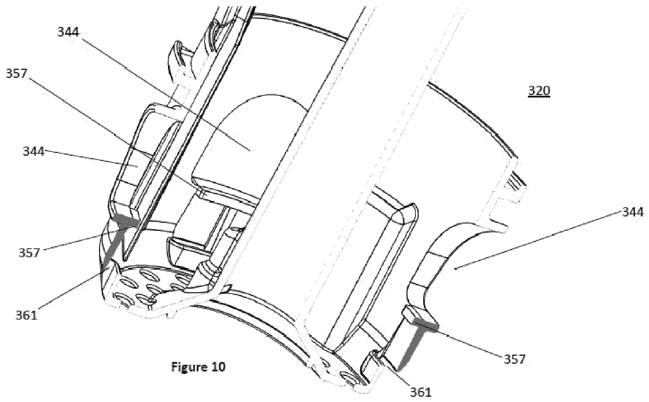

With reference to Figures 9 and 10 and according to yet another embodiment of the present disclosure, a one-piece seed tray 320 is shown without a seed guard. The seed tray 320 is further comprised of seed apertures 344, also known as ports, the apertures 344 adapted to allow specific access points to seeds placed within the seed tray 320. The seed tray 320 is also comprised of a central rod 353, the central rod 353 containing a spring mechanism (not shown) to allow for the movement of a shroud (not shown) independent of the seed tray 320. As shown, the seed tray 320 is further comprised of an undercut 357 positioned below each of the apertures 344. The undercut 357 acts as a small lip or barrier on which seeds will abut and therefore prevent the seeds from falling out of the apertures 344 when the seed tray 320 is shaken or swayed. Small openings 361 are also shown, positioned directly below the undercuts 357. These openings 361 are created during the manufacturing of the seed tray 320 and the undercuts 357 specifically, as a small tab is inserted therein as part of the mould. The openings 361 help provide additional ventilation to the seeds, which is desired as moist seeds can rot when they are and remain wet.

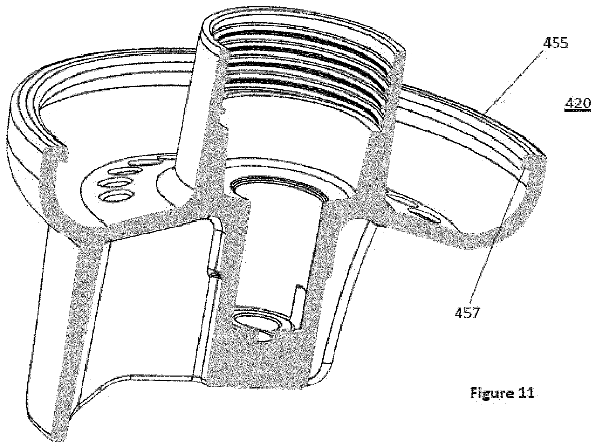

With reference to Figure 11 and according to another embodiment of the present disclosure, a seed tray 420 is shown in greater detail. As shown, the rim 455 of the seed tray 420 is further comprised of an undercut 457, which acts as a barrier to prevent seeds from falling out of the seed tray 420. In this particular seed tray 420, the undercut 457 is positioned around the entire circumference of the seed guard, as opposed to below apertures (not shown) that would allow only specific access to the seeds of the seed tray 420.

Many modifications of the embodiments described herein as well as other embodiments may be evident to a person skilled in the art having the benefit of the teachings presented in the foregoing description and associated drawings. It is understood that these modifications and additional embodiments are captured within the scope of the contemplated disclosure which is not to be limited to the specific embodiment disclosed.

## Claims

1. A bird feeder comprising:
a seed container to contain seeds;
a seed tray secured to the seed container and adapted to provide access to the seeds;
a shroud connected the seed tray, the shroud to protect at least a portion of the seed container and seed tray; and,
a cover releasably secured to at least one of the shroud and the seed container.

2. The bird feeder of Claim 1 wherein the seed tray is further comprised of a central rod, the central rod housing a spring mechanism.

3. The bird feeder of Claim 1 wherein the seed tray is further comprised of at least one undercut creating a peripheral barrier to reduce a loss of the seeds.

4. The bird feeder of Claim 3 wherein the at least one undercut extends inwardly from an outer peripheral edge of the seed tray.

5. The bird feeder of Claim 1 further comprised of a seed guard connected to and positioned over an outer peripheral edge of the seed tray.

6. The bird feeder of Claim 5 wherein the seed guard is further comprised of:
a rim to position onto a seed tray of a bird feeder;
an undercut protruding from the rim, creating a peripheral barrier to prevent seeds falling out of the seed tray;
a plurality of projections extending inwardly from the rim; and,
a plurality of stabilizers extending downwardly from the rim.

7. The bird feeder of Claim 3 further comprised of at least one opening positioned below the at least one undercut and wherein the at least one undercut extends inwardly over the at least one opening.

8. The bird feeder of Claim 6 wherein the plurality of stabilizers have a curved inner face to flushly mate with an inner portion of the seed tray.

9. The bird feeder of Claim 6 wherein the rim of the seed guard is further comprised of a stepped portion to rest on the outer peripheral edge of the seed tray.

10. A seed guard for use with a bird feeder, the seed guard comprising:
a rim to position onto a seed tray of a bird feeder; and,
at least one undercut protruding from the rim, creating a peripheral barrier to prevent seeds falling out of the seed tray.

11. The seed guard of Claim 10 further comprising:
a plurality of projections extending from the rim; and,
a plurality of stabilizers extending from the rim,
wherein the plurality of projections and stabilizers keep the seed guard in place over the seed tray.

12. The seed guard of Claim 11 wherein the plurality of stabilizers have a curved inner face to flushly mate with an inner portion of the seed tray.

13. The seed guard of Claim 10 wherein the rim is further comprised of a stepped portion to rest on an outer peripheral edge of the seed tray.

14. The seed guard of Claim 11 wherein the plurality of projections extend inwardly from the rim and the plurality of stabilizers extend downwardly from the rim.

15. The seed guard of Claim 10 wherein the undercut projects inwardly from the rim.
